(19) Europäisches Patentamt / European Patent Office / Office européen des brevets

(11) **EP 4 179 201 B1**

(12) **EUROPEAN PATENT SPECIFICATION**

(45) Date of publication and mention
of the grant of the patent:
**24.01.2024 Bulletin 2024/04**

(21) Application number: **21735148.5**

(22) Date of filing: **11.06.2021**

(51) International Patent Classification (IPC):
**F03D 13/20** *(2016.01)*     **F03D 17/00** *(2016.01)*

(52) Cooperative Patent Classification (CPC):
**F03D 13/20; F03D 17/00;** F05B 2260/80;
F05B 2270/309; F05B 2270/329; F05B 2270/807;
Y02E 10/72; Y02E 10/728

(86) International application number:
**PCT/DK2021/050187**

(87) International publication number:
**WO 2022/008014 (13.01.2022 Gazette 2022/02)**

(54) **DETERMINING SUNLIGHT EFFECT ON WIND TURBINE TOWER INCLINATION USING TOWER TOP ACCELEROMETERS**

BESTIMMUNG DES SONNENLICHTEFFEKTS AUF DER WINDTURBINENTURMNEIGUNG UNTER VERWENDUNG VON TURMOBERBESCHLEUNIGUNGSMESSERN

DÉTERMINATION DE L'EFFET DE LA LUMIÈRE DU SOLEIL SUR L'INCLINAISON D'UNE TOUR D'ÉOLIENNE À L'AIDE D'ACCÉLÉROMÈTRES DE TÊTE DE TOUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2020 DK PA202070469**

(43) Date of publication of application:
**17.05.2023 Bulletin 2023/20**

(73) Proprietor: **VESTAS WIND SYSTEMS A/S
8200 Aarhus N (DK)**

(72) Inventor: **SKAFTE, Anders
8200 Aarhus N (DK)**

(74) Representative: **Vestas Patents Department
Hedeager 42
8200 Aarhus N (DK)**

(56) References cited:
EP-A1- 2 133 563          EP-A1- 3 497 326
DE-A1-102016 103 659      US-A1- 2014 316 740

## Description

### Background

This invention generally relates to wind turbines, and in particular to methods, systems, and computer program products for determining the inclination of a wind turbine tower using tower top accelerometers.

When new wind turbines are erected, the tower risks having a slight inclination due to the tower being out of vertical. The inclination may result from one or more causes, such as differential settlement of foundations, solar radiation heating of the tower, and tower imperfections. According to the current International Electrotechnical Commission (IEC) and Deutsches Institut fur Bautechnik (DIBt) standards, the maximum allowable inclination of the tower is set by adding an additional bending moment to the extreme tower bending moment provided by aeroelastic simulations. Currently, the standard is based on a presumption that the tower will have an inclination of 8 mm/m in the design loads.

From time to time, there is a need to determine the actual tower deflection and to understand the effect of various factors on the tower deflection. One known procedure for determining tower inclination is to measure how far the tower is out of vertical using a 3D laser scanner. Use of scanner equipment requires a site visit and specialized equipment, causing tower inclination measurements to be expensive.

Thus, there is a need for improved systems, methods, and computer program products for determining tower inclination in wind turbine systems. Documents EP3497326 A1 , US 2014/316740 A1, EP2133563 A1 and DE102016103659 A1 give prior art examples of such systems and methods.

### Summary of Invention

In an embodiment of the invention, a method of measuring an inclination of a tower of a wind turbine including a nacelle mounted on the tower is provided. The method includes collecting acceleration data from an accelerometer operatively coupled to the nacelle and configured to sense acceleration along an accelerometer axis while the nacelle is in each of a plurality of yaw positions. The method determines a level of acceleration along the accelerometer axis due to gravity at each yaw position to generate a plurality of acceleration levels, and determines the inclination of the tower based on the plurality of acceleration levels. The method further comprising the steps of collecting a first data set of the acceleration data during a first period of time; collecting a second data set of the acceleration data during a second period of time; determining a first inclination of the tower from the first data set; determining a second inclination of the tower from the second data set; and determining a time-dependent effect of a presence or an absence of sunlight on the inclination of the tower based on the first inclination of the tower and the second inclination of the tower.

In another embodiment of the invention, the nacelle rotates about an axis of rotation, and the accelerometer is configured so that the accelerometer axis is normal to the axis of rotation.

In another embodiment of the invention, the plurality of yaw positions covers a full rotation of the nacelle about the axis of rotation.

In another embodiment of the invention, determining the inclination of the tower based on the plurality of acceleration levels includes determining a maximum acceleration level of the plurality of acceleration levels, determining a minimum acceleration level of the plurality of acceleration levels, and determining the inclination of the tower based on the maximum acceleration level and the minimum acceleration level.

In another embodiment of the invention, determining the inclination of the tower based on the maximum acceleration level and the minimum acceleration level includes determining a first inclination of the accelerometer based on the maximum acceleration level, determining a second inclination of the accelerometer based on the minimum acceleration level, and determining the inclination of the tower based on a difference between the first inclination of the accelerometer and the second inclination of the accelerometer.

In another embodiment of the invention, collecting the acceleration data from the accelerometer while the nacelle is in each of the plurality of yaw positions includes, stopping the nacelle at each yaw position, collecting acceleration data for a period of time while the nacelle is stopped, and restarting yawing of the nacelle after the period of time.

In another embodiment of the invention, the method further includes discarding a first portion of the acceleration data collected during a start portion of the period of time, optionally discarding a second portion of the acceleration data collected during an end portion of the period of time, and low-pass filtering a remaining portion of the acceleration data that was not discarded to produce filtered acceleration data, wherein the level of acceleration at each yaw position is determined based on the filtered acceleration data.

In another embodiment of the invention, the method further includes determining a mean value of the level of acceleration at each yaw position based on the filtered acceleration data, and detrending the filtered acceleration data based on the mean values of the levels of acceleration to remove any offsets and possible signal drift.

In another embodiment of the invention, the method further includes generating an acceleration plot including the level of acceleration at each yaw position plotted relative to the yaw position, comparing the acceleration plot to a sinusoidal plot, and discarding the acceleration data if the acceleration plot does not match the sinusoidal plot.

In another embodiment of the invention, the acceleration data is collected while the wind turbine is in a low wind idle mode or a parked mode.

In another embodiment of the invention, the acceleration data is collected while the wind speed is below a wind speed threshold selected from the group consisting of a cut-in wind speed and a service wind speed.

In another aspect of the invention, a wind turbine is provided. The wind turbine includes a controller in communication with the accelerometer and configured to implement the method of measuring the inclination of the tower of the wind turbine.

In another aspect of the invention, a computer program product is provided. The computer program product includes a non-transitory computer-readable storage medium, and program code stored on the non-transitory computer-readable storage medium that, when executed by one or more processors of a controller, causes the controller to implement the method of measuring the inclination of the tower of the wind turbine.

In another aspect of the invention, a controller for a wind turbine is presented. The controller includes one or more processors, and a memory coupled to the one or more processors and including program code that, when executed by the one or more processors, causes the controller to implement the method of measuring the inclination of the tower of the wind turbine. The above summary presents a simplified overview of some embodiments of the invention to provide a basic understanding of certain aspects of the invention discussed herein. The summary is not intended to provide an extensive overview of the invention, nor is it intended to delineate the scope of the invention. The sole purpose of the summary is merely to present some concepts in a simplified form as an introduction to the detailed description presented below.

**Brief Description of the Drawings**

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a perspective view of an exemplary wind turbine in accordance with an embodiment of the invention including a nacelle having a nacelle reference frame.

FIG. 2 is a perspective view of a portion of the wind turbine of FIG. 1 in which the nacelle is partially broken away to expose structures housed inside the nacelle including one or more accelerometers.

FIG. 3 is a diagrammatic view of a control system that may be used to control the wind turbine of FIGS. 1 and 2.

FIG. 4 is a diagrammatic view of a controller that may be used to implement the control system of FIG. 3.

FIG. 5 is a diagrammatic view of a wind turbine including a tower that is out of vertical such that an inclination angle exists between an axis of rotation of the nacelle and a z-axis of a fixed reference frame.

FIG. 6 is a diagrammatic view of relationships between an accelerometer reference frame and the fixed reference frame for the wind turbines of FIGS. 1, 2 and 5 as the nacelle is yawed around the axis of rotation for each of several operational scenarios.

FIG. 7 is a flowchart of a process for determining the inclination angle based on data received from the accelerometer of FIG. 6.

FIG. 8 is a graphical view of exemplary accelerometer data verses yaw position for a wind turbine in accordance with an embodiment of the invention.

It should be understood that the appended drawings are not necessarily to scale, and may present a somewhat simplified representation of various features illustrative of the basic principles of the invention. The specific design features of the sequence of operations as disclosed herein, including, for example, specific dimensions, orientations, locations, and shapes of various illustrated components, may be determined in part by the particular intended application and use environment. Certain features of the illustrated embodiments may have been enlarged or distorted relative to others to facilitate visualization and a clear understanding.

**Detailed Description of Embodiments of the Invention**

Embodiments of the invention are directed to systems, methods, and computer program products for estimating the inclination of a wind turbine tower based on the static contribution to the output of a tower top accelerometer due to Earth's gravity. Embodiments of the invention exploit the principle that if the wind turbine tower has an inclination, this inclination will cause the static contribution of gravity to the accelerometer output to vary in a deterministic way as the nacelle is rotated about its axis of rotation. By yawing the turbine, the tower inclination can be estimated based on differences in the acceleration signal at different yaw positions. By leveraging existing hardware in the wind turbine system, embodiments of the invention may be implemented with low incremental cost by simply updating software in the wind turbine system.

Embodiments of the invention may also be used to provide information related to long term changes in tower inclination, such as may be caused by differential foundation settlement occurring over a long period of time. By way of example, differential foundation settlement due to clay settlement may occur over a period of years. Regular measurements of tower inclination across a large number of wind turbines may provide a statistical distribution for the tower inclination. The statistical distribution may then be used to support optimizing the inclination standards considered in the current design loads, e.g., by reducing the presumed tower inclination contribution. The information from these tests may also be used as input to wind turbine controllers to optimize operation parameters by considering tower inclination, and to gain knowledge about the tower inclination due to the effects of solar radiation. In this manner the effect of solar radiation can be singled out for an even better understanding of the causes and the mitigating solutions of the inclination of the tower.

The present invention is directed to collecting acceleration data from an accelerometer operatively coupled to the nacelle and configured to sense acceleration along an accelerometer axis while the nacelle is in each of a plurality of yaw positions.

Nevertheless as a background understanding, GNSS-based sensors may also be applied for the same purpose, but with appropriate modifications.

For example, high-precision GPS sensors may achieve a precision down to 10 mm, which may be sufficiently precise for measuring the displacement of the tower top with respect to the center of the bottom tower cross section. To establish the center point of the tower just above the foundation, static GPS measurements are measured at a number of places, e-g- four, equally distributed on the circumference of the tower. To ensure the GPS can receive a proper strength signal, this can be done on the outside of the tower. A circle is fitted to the measurement points using e.g. a least squares approximation, and the center point of the tower base is established as the center of the fitted circle.

To find the position of the tower top, the GPS is placed on top of the nacelle. To compensate for the GPS is not placed directly over the tower top center, and to compensate for the effect of the overhanging moment, the turbine is yawed 360 degrees, while tracking the position with the GPS. To establish the center of the tower top section, a circle is fitted to the GPS data measured during the yaw sweep defining the center of this circle. Once the center of the base section and the top section are estimated, the tower out of vertical can be determined as the distance between the two center points.

One of the drawbacks by using GPS/GNSS sensors is that they tend to drift over time. A possible mitigation to avoid the drift, is to place a ground station at a fixed position, which communicates with the sensor placed in the nacelle. But this will come with an extra cost-in.

As an alternative to use of a ground station, monitoring of the drift and a re-calibration of the sensor(s) may be applied. Once the GPS/GNSS is installed in the nacelle, a baseline measurement is made. This is done by yawing the turbine 360 degrees, while there is low wind and the turbine is in idle/standstill. By fitting a circle to the data and finding its center, the center of the tower can be established. This procedure can be done with fixed time interval. Any changes in center point of the fitted circles may be assumed to relate to drift. By doing a yaw round, will further make it possible to disregard the deflection of the tower due to the overhanging moment. The yaw round procedure can be programmed into the controller, so it happens with fixed intervals. However, as a quick response may not be necessary, the implementation can be performed such that the yaw round only happens when the wind speed is below cut-in, so there will be no loss of AEP due to this. It is further important, that the yaw round is only performed at nighttime, such that any temperature effects on the tower are neglected.

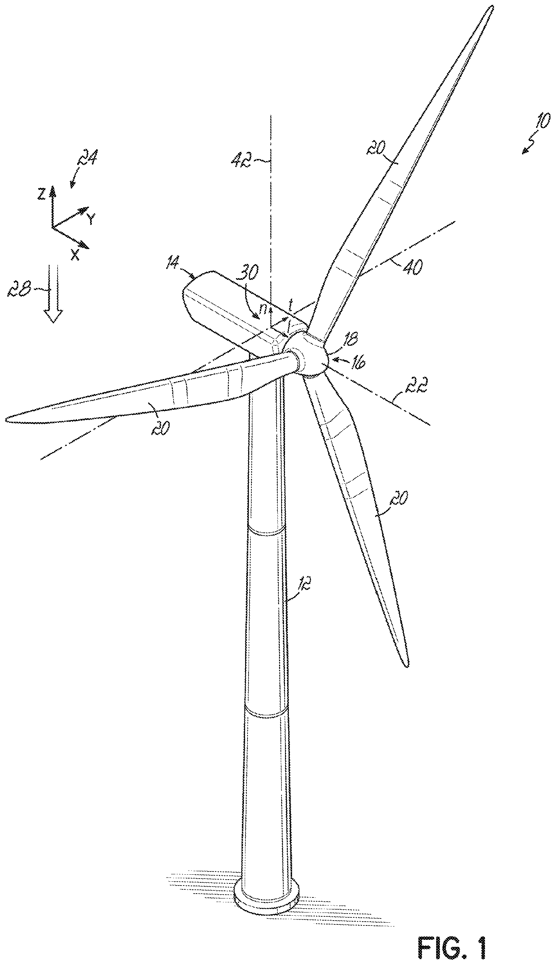

FIG. 1 illustrates an exemplary wind turbine 10 in accordance with an embodiment of the invention. The wind turbine 10 includes a tower 12 extending upward from a foundation, a nacelle 14 disposed at the apex of the tower 12, and a rotor 16 operatively coupled to a generator in the nacelle 14. In addition to the generator, the nacelle 14 typically houses various components needed to convert wind energy into electrical energy and needed to operate and optimize the performance of the wind turbine 10. The tower 12 supports the load presented by the nacelle 14, rotor 16, and other wind turbine components housed inside the nacelle 14. The tower 12 of wind turbine 10 elevates the nacelle 14 and rotor 16 to a height above ground level that allows the rotor 16 to spin freely and at which air currents having lower turbulence and higher velocity are often found.

The rotor 16 includes a hub 18 and one or more (e.g., three) blades 20 attached to the hub 18 at locations distributed about the circumference of the hub 18. The blades 20 project radially outward from the hub 18, and are configured to interact with passing air currents to produce rotational forces that cause the hub 18 to spin about its longitudinal axis 22. This rotational energy may be delivered to the generator housed within the nacelle 14 and converted into electrical power. To optimize performance of the wind turbine 10, the pitch of blades 20 may be adjusted by a pitch system in response to wind speed and other operational conditions.

An exemplary fixed reference frame 24 includes an x-axis, a y-axis, and a z-axis that define a three-dimensional coordinate space according to the right-hand rule. The z-axis of fixed reference frame 24 is parallel with the gravitational field 28 of Earth, and is oriented so that the z-axis points upward away from the center of Earth. The x-axis and y-axis of fixed reference frame 24 are orthogonal to the z-axis and to each other, and define a horizontal plane. The fixed reference frame 24 thereby provides a reference frame that is fixed relative to the Earth.

A nacelle reference frame 30 includes a longitudinal axis ($l$-axis), a transverse axis (t-axis), and a normal axis (n-axis) that define another right-handed three-dimensional coordinate space which is fixed relative to the nacelle 14. The $l$-axis of nacelle reference frame 30 may be aligned with the longitudinal axis 22 of the rotor 16. The t-axis of nacelle reference frame 30 may be aligned with a transverse axis 40 of the nacelle 14 that is generally orthogonal to the longitudinal axis 22 of rotor 16. The n-axis may be aligned with an axis of rotation 42 of the nacelle 14 about which the nacelle 14 is yawed. The axis of rotation 42 may be generally aligned with a longitudinal axis of tower 12, which, absent any tower inclination, may be generally aligned with the z-axis of fixed reference frame 24. As used herein, the yaw-angle of nacelle 14 may be considered to be zero degrees when the projection of the $l$-axis of nacelle reference frame 30 onto the horizontal plane is parallel to the x-axis of fixed reference frame 24.

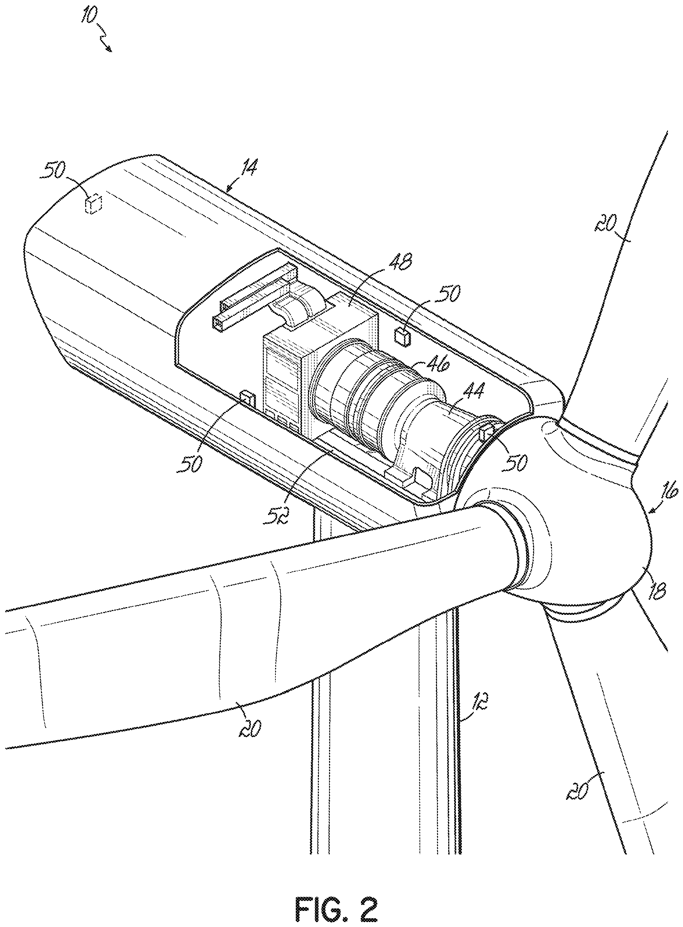

FIG. 2 presents a perspective view in which the nacelle 14 is partially broken away to expose structures housed inside. A main shaft extending from the rotor 16 into the nacelle 14 may be held in place by a main bearing support 44 which supports the weight of the rotor 16 and transfers the loads on the rotor 16 to the tower 12. The main shaft may be operatively coupled to a gearbox 46 that transfers the rotation thereof to a generator 48. The electrical power produced by the generator 48 may be supplied to a power grid (not shown) or an energy storage system (not shown) for later release to the grid as understood by a person having ordinary skill in the art. In this way, the kinetic energy of the wind may be harnessed by the wind turbine 10 for power generation.

The nacelle 14 may also house one or more accelerometers 50 configured to detect acceleration levels in the nacelle 14. Each accelerometer 50 may be a single-axis accelerometer that senses acceleration along a single axis, or (more typically) a multi-axis accelerometer that senses acceleration in multiple axes, e.g., three orthogonal axes. Each accelerometer 50 may be sensitive to both linear acceleration (e.g., due to swaying of the tower 12 or rotation of the nacelle 14) and the local gravitational field 28.

The weight of the nacelle 14 including the components housed therein may be carried by a load bearing structure 52. The load bearing structure 52 may include an outer housing of the nacelle 14 and one or more additional structural components such as a framework or lattice, and a gear bell which through a yaw bearing (not shown) operatively couples the load of the nacelle 14 to the tower 12. The yaw bearing may be configured to allow the nacelle 14 to be rotated about its axis of rotation 42 by a yaw system to keep the wind turbine 10 pointed into the wind.

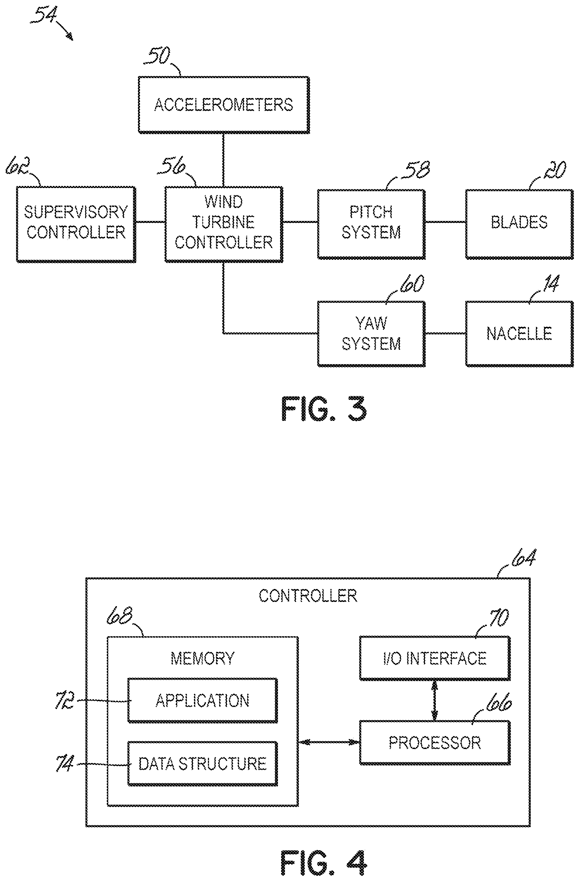

FIG. 3 illustrates an exemplary control system 54 that may be used to control the wind turbine 10. The control system 54 includes a wind turbine controller 56 in communication with the accelerometers 50, a pitch system 58, a yaw system 60, and a supervisory controller 62. The supervisory controller 62 may be configured to implement a system-wide control strategy for a group of wind turbines 10 (e.g., a wind farm) that optimizes the collective performance of the wind turbines 10, e.g., to maximize power production of the group and minimize overall maintenance. The yaw system 60 may be used by the wind turbine controller 56 to control the direction in which the nacelle 14 is pointed, and may include one or more yaw controllers, drive systems, position sensors, etc. configured to implement a yaw command signal received from the wind turbine controller 56. The pitch system 58 may be configured to adjust the pitch of the blades 20 collectively or independently in response to a pitch command signal received from the wind turbine controller 56.

The wind turbine controller 56 may be configured to monitor the speed of the rotor 16 and adjust the pitch of the blades 20 in response to existing wind conditions in order to control operation of the wind turbine 10. When the wind speed is below a cut-in speed for the wind turbine 10, the wind turbine 10 may be in an idle mode during which rotor 16 is not rotating or slowly rotating. As the wind speed exceeds the cut-in speed, the rotor 16 of wind turbine 10 may begin to rotate, which may allow the wind turbine 10 to begin generating power. As the wind speed further increases from the cut-in speed up to a rated wind speed, the wind turbine controller 56 may be configured to set the blade pitch to maximize the conversion of aerodynamic energy into rotational energy at the generator 48. Once the rated wind speed has been reached, the wind turbine 10 may be generating electricity at its maximum rated output power. From this point on, as the wind speed increases further, the wind turbine controller 56 may adjust the blade pitch to maintain the speed and torque applied to the generator 48 at the rated levels. Finally, when the wind speed reaches a cut-out speed, the wind turbine controller 56 may feather the blades to prevent damage to the wind turbine 10. Typically, service may only be performed on the wind turbine 10 when the wind is below a service wind speed. While service is being performed, the wind turbine controller 56 may place the wind turbine 10 in a parked mode by feathering the blades 20 and applying a brake to prevent the rotor 16 from rotating.

FIG. 4 illustrates an exemplary controller 64 that may be used to provide one or more components of embodiments of the invention, such as the wind turbine controller 56 or supervisory controller 62. The controller 64 may include a processor 66, memory 68, and an input/output (I/O) interface 70. The processor 66 may include one or more devices that perform operations on data based on internal logic or operational instructions that are stored in memory 68. Memory 68 may include a single memory device or a plurality of memory devices capable of storing data. Computer program code embodied as one or more computer software applications, such as an application 72 residing in memory 68, may have instructions executed by the processor 66. One or more data structures 74 may also reside in memory 68, and may be used by the processor 66 or application 72 to store or manipulate data. The I/O interface 70 may provide a machine interface that operatively couples the processor 66 to other devices and systems, such as one or more of the accelerometers 50, wind turbine controller 56, pitch system 58, yaw system 60, and supervisory controller 62. The application 72 may thereby work cooperatively with the external devices and systems by communicating via the I/O interface 70 to provide the various features, functions, applications, processes, or modules comprising embodiments of the invention.

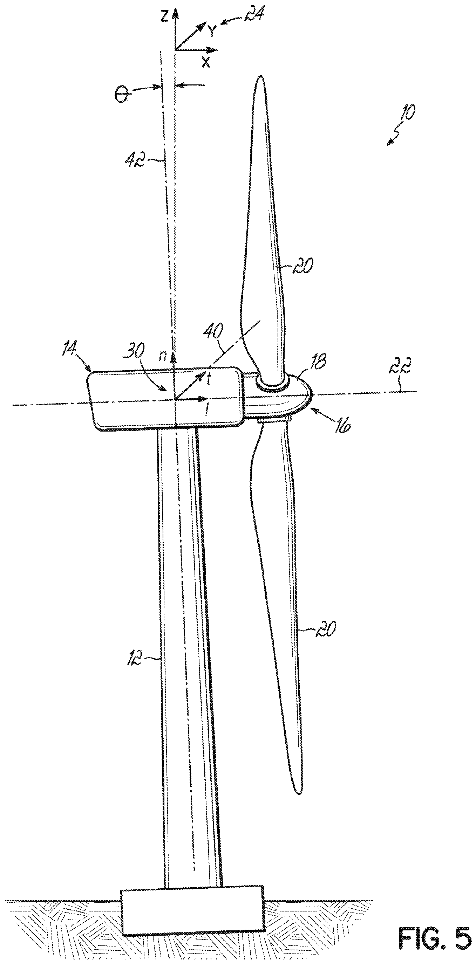

FIG. 5 illustrates the wind turbine 10 in accordance with an embodiment of the invention in which the tower 12 has an offset from vertical that results in a non-zero inclination angle $\theta$ between the vertical axis z of fixed reference frame 24 and the normal axis $n$ of nacelle reference frame 30. Wind turbine towers often have a slight inclination angle $\theta$ due to the tower being out of vertical. The inclination angle $\theta$ may result from different causes, such as differential settlement of the foundation, solar radiation causing uneven thermal expansion on different sides of the tower 12, tolerances in joints between sections of the tower 12, and other tower imperfections.

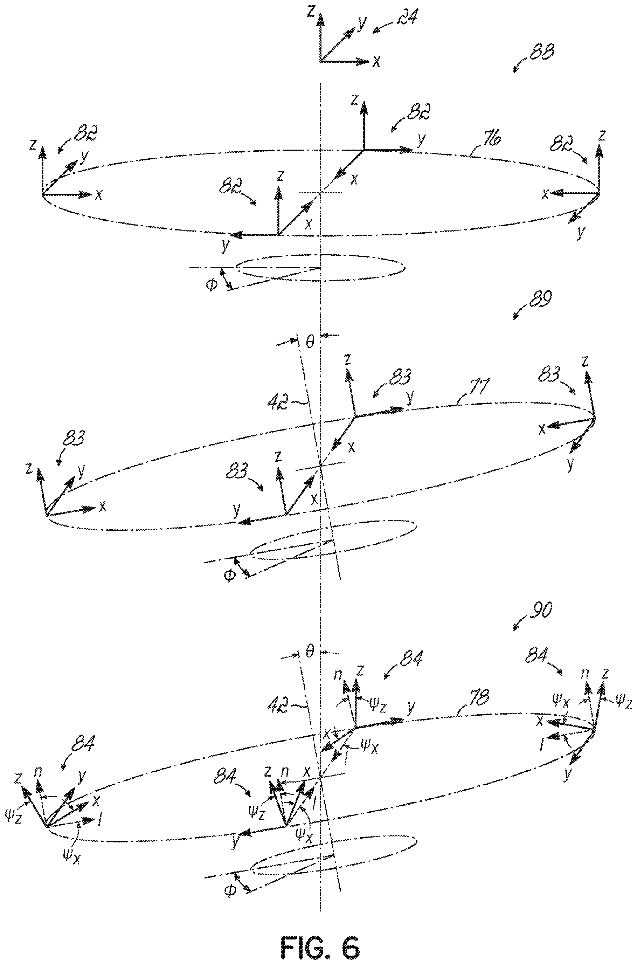

FIG. 6 illustrates exemplary paths 76-78 of respective accelerometer reference frames 82-84 of a three-axis accelerometer 50 radially offset from the axis of rotation 42 as the nacelle 14 is rotated for each of three different scenarios 88-90. In each scenario 88-90, as the accelerometer 50 orbits the axis of rotation 42, the accelerometer reference frame 82 rotates about its z-axis as viewed from the fixed reference frame 24. As a result, the orientation of the x and y-axes of accelerometer reference frames 82-84 also rotate.

In a zero-inclination scenario 88, the n-axis of nacelle reference frame 30 is parallel to the z-axis of fixed reference frame 24 (i.e., the tower 12 is vertical). Because the nacelle's axis of rotation 42 is parallel to the z-axis of fixed reference frame 24, the accelerometer reference frame 82 follows a circular path 76 in the horizontal plane as the nacelle 14 rotates. In the zero-inclination scenario 88, the inclinations (i.e., angles with respect to the z-axis of fixed reference frame 24) of the x, y, and z-axes of accelerometer reference frame 82 do not vary with the yaw angle $\Phi$ of the nacelle 14.

In a non-zero inclination scenario 89, the n-axis of nacelle reference frame 30 is not parallel to the z-axis of fixed reference frame 24, i.e., the tower 12 has a non-zero inclination angle $\theta$. Because the nacelle's axis of rotation 42 is not parallel to the z-axis of fixed reference frame 24, accelerometer reference frame 83 follows a circular path 77 that is inclined relative to the horizontal plane. As a result, as viewed from the fixed reference frame 24, the inclination of the x and y-axes of accelerometer reference frame 83 vary sinusoidally as a function of the yaw angle $\Phi$ as the nacelle 14 is rotated.

Scenario 90 is a non-zero inclination scenario in which the accelerometer reference frame 84 is not aligned with the nacelle reference frame 30, e.g., there is a mechanical tolerance or mounting error that causes the accelerometer reference frame 84 to be rotated about one or more of its axes x, $y$, z (e.g., the y-axis) relative to the nacelle reference frame 30. As with non-zero inclination scenario 89, the n-axis of nacelle reference frame 30 is not parallel to the z-axis of fixed reference frame 24, i.e., the tower 12 has a non-zero inclination angle $\theta$. In addition, due to the exemplary error rotation about the y-axis, the x and z-axes of accelerometer reference frame 84 are not parallel with the l and n-axes of nacelle reference frame 30, which introduces respective measurement error angles $\psi_x$ and $\psi_z$ in those axes.

Because the nacelle's axis of rotation 42 is not parallel to the z-axis of fixed reference frame 24, in the non-zero inclination scenario 90, the accelerometer reference frame 84 also follows a circular path 78 that is inclined relative to the horizontal plane. As a result, as viewed from the fixed reference frame 24, the inclination of the x and y-axes of accelerometer reference frame 83 vary sinusoidally as a function of the yaw angle $\Phi$ of nacelle 14 as the nacelle 14 is rotated. However, the measurement error angles $\psi_x$ and $\psi_z$ between the x and z-axes of accelerometer reference frame 84 and the l and n-axes of nacelle reference frame 30 do not vary as a function of the yaw angle $\Phi$. Thus, any measurement error angles $\psi_x$, $\psi_y$, and $\psi_z$ due to misalignment between an accelerometer reference frame and the nacelle reference frame 30 are constant with respect to the yaw angle $\Phi$. The error angles $\psi_x$, $\psi_y$, and $\psi_z$ therefore merely introduce an offset that cancels itself out, and can be ignored.

Examples of trigonometric calculations that may be used to determine the inclination angle are provided below.

Assuming no measurement error angles $\psi_x$, $\psi_y$, $\psi_z$, the outputs of the three-axis accelerometer 50 as the nacelle rotates about its axis of rotation 42 may be provided by the following equations:

$$a_x = g \times \cos(\varphi) \times \sin(\theta) \quad Eqn. 1$$

$$a_y = g \times \sin(\varphi) \times \sin(\theta) \quad Eqn. 2$$

$$a_z = g \times \cos(\theta) \quad Eqn. 3$$

Where $a_x$, $a_y$, and $a_z$ are respective outputs corresponding to each of the x-axis, y-axis, and z-axis of the accelerometer, $g$ is the output level of the respective accelerometer axis when subjected to a level of acceleration equal to one Earth gravity, $\varphi$ is the yaw angle of the nacelle, and $\theta$ is the tower inclination. The value of $g$ in Equations 1-3 can be determined for a stationary three-axis accelerometer as:

$$g = \sqrt{a_x{}^2 + a_y{}^2 + a_z{}^2} \quad Eqn. 4$$

Vector algebra may be used to calculate an angle change $\Delta\Phi$ of the apparent gravity vector between any two accelerometer readings $a$ and $b$ using the following equation:

$$\Delta\Phi = acos\left(\frac{a_x b_x + a_y b_y + a_z b_z}{\sqrt{a_x^2 + a_y^2 + a_z^2}\sqrt{b_x^2 + b_y^2 + b_z^2}}\right) \quad Eqn. 5$$

As the nacelle 14 is rotated, the output of the x-axis of accelerometer may peak at yaw angles $\Phi = 0$ and $\Phi = \pi$, and the output of the y-axis of accelerometer may peak at yaw angles $\Phi = \pi/2$ and $\Phi = -\pi/2$. At these yaw angles, Equations 1 and 2 provide the following peak values:

$$\Phi = 0; \; a_x = g \times \sin(\theta) \quad Eqn. 6$$

$$\Phi = \pi; \; a_x = -g \times \sin(\theta) \quad Eqn. 7$$

$$\Phi = \frac{\pi}{2}; \; a_y = g \times \sin(\theta) \quad Eqn. 8$$

$$\Phi = -\frac{\pi}{2}; \; a_x = -g \times \sin(\theta) \quad Eqn. 9$$

Thus, the inclination angle $\theta$ can be calculated by determining the peak output values of one or more axes of one or more of the accelerometers 50, and applying one of the following equations to the output of the accelerometer:

$$\theta = \frac{\left(\sin^{-1}\frac{a_x(\Phi_P)}{g} - \sin^{-1}\frac{a_x(\Phi_P + \pi)}{g}\right)}{2} \quad Eqn. 10$$

$$\theta = \frac{\left(\sin^{-1}\frac{a_y(\Phi_P)}{g} - \sin^{-1}\frac{a_y(\Phi_P + \pi)}{g}\right)}{2} \quad Eqn. 11$$

where $\Phi_P$ is the yaw angle at which the output of the respective accelerometer peaks.

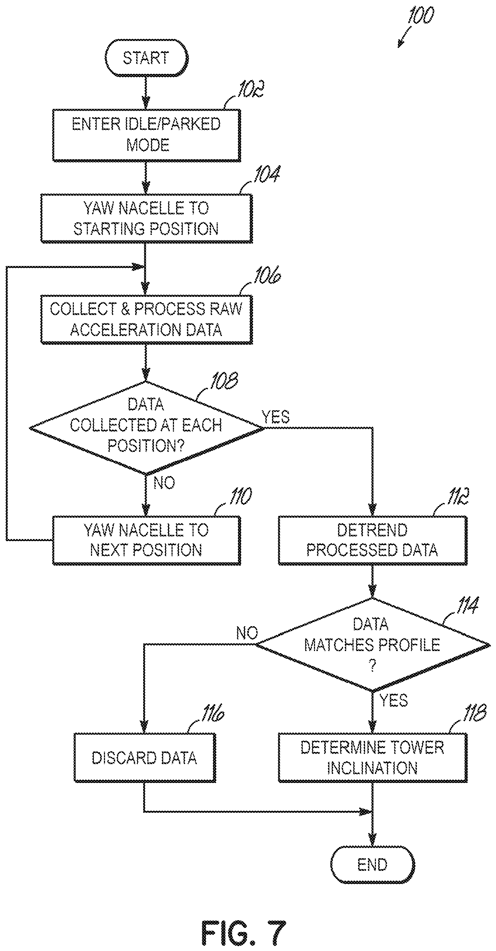

FIG. 7 depicts a flowchart illustrating an exemplary process 100 that may be used to determine a tower inclination in accordance with an embodiment of the invention. In block 102, the process 100 may cause the wind turbine to enter the idle or parked mode so that the blades 20 of rotor 16 are not rotating.

Once the wind turbine 10 has entered idle/parked mode, the process 100 may proceed to block 104 and yaw the nacelle 14 to a starting position (e.g., zero degrees) before proceeding to block 106 to begin collecting and processing accelerometer data. The process 100 may collect accelerometer data for a period of time (e.g., one minute) while the nacelle 14 is in the yaw position. The process 100 may determine the start of the data collection period based on a signal from a yaw motor indicating that yawing has stopped, and thus the nacelle 14 is in a fixed yaw position. In an embodiment of the invention, a predetermined amount of data may be discarded from the beginning of the period, e.g., the first 10 seconds. Discarding this starting data may remove dynamic influences (e.g., tower oscillations) resulting from stopping or staring the yaw motor. In some embodiments, a predetermined amount of data may also be discarded from the end of the period, e.g., the last few seconds. The data at the end of the period may be discarded in cases where the controller collecting data does not control when the yaw system 60 starts, and thus merely responds to detection of the start of yawing. In any case, the process 100 may filter the remaining data using a filtering algorithm that preserves the static contribution of gravity to the output of the accelerometer (e.g., a low-pass filtering algorithm), and determine a mean value of the filtered data. The process 100 may then store the mean value for use in determining the tower inclination.

Once the process 100 has collected and processed the acceleration data, the process 100 may proceed to block 108 and determine if acceleration data been collected and processed for each of a plurality of yaw positions, e.g., 10 positions spaced evenly across 360 degrees of rotation. If acceleration data has not been collected for each yaw position ("NO" branch of decision block 108), the process 100 may proceed to block 110, yaw the nacelle 14 to the next yaw position, and return to block 106 to begin collecting and processing acceleration data for that yaw position. If the acceleration data has been collected and processed for each yaw position ("YES" branch of decision block 108), the process 100 may proceed to block 112.

In block 112, the process 100 may detrend the processed acceleration data from each yaw position. Detrending may eliminate influences due to the position of the accelerometer 50 being offset from the axis of rotation 42.

In block 114, the process may determine if the acceleration measured at each yaw position matches an expected profile. For example, the acceleration levels may be plotted against the yaw position and compared to a sinusoidal function. This comparison may include fitting the plotted function to the sinusoidal function (e.g., scaling the amplitude and period, and adding a phase-offset to the plotted function), determining a mean-squared error between the plots, and comparing the mean squared error to a threshold. If the acceleration data does not match the profile ("NO" branch of decision block 114), the process 100 may proceed to block 116, discard the data, and terminate. The process 100 may determine the acceleration data does not match the profile, for example, if the mean squared error is above a predetermined threshold indicating the data is corrupted or otherwise unreliable.

If the acceleration data matches the profile ("YES" branch of decision block 114), the process 100 may proceed to block 118 and determine the tower inclination. The process 100 may determine the tower inclination by determining minimum and maximum acceleration levels $a_{min}$, $a_{max}$ measured across the yaw positions. The minimum and maximum acceleration levels $a_{min}$, $a_{max}$ may be normalize to 1g, an arcsine function applied to each normalized value, and a difference between the results determined according to the following equation:

$$2\theta = \sin^{-1}\frac{a_{max}}{g} - \sin^{-1}\frac{a_{min}}{g} \quad Eqn.\,18$$

The process 100 may then determine the tower inclination by dividing the result of Equation 18 by 2. Once the tower inclination has been determined, the inclination angle $\theta$, acceleration data, or both the inclination angle $\theta$ and the acceleration data may be stored in memory (e.g., in a central database), and the process 100 terminated.

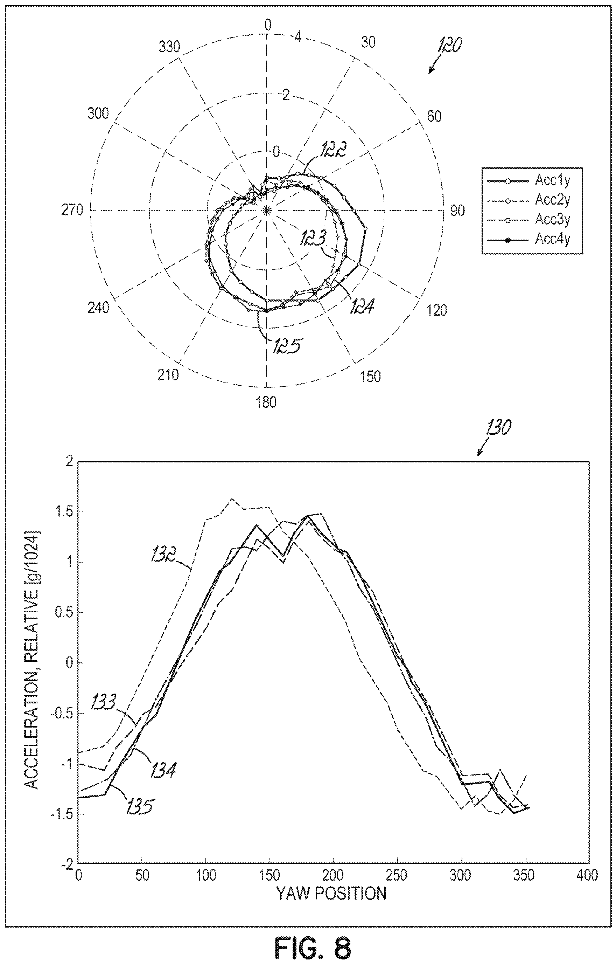

FIG. 8 depicts graphs 120, 130 illustrating experimental results obtained by processing acceleration data obtained from four accelerometers in the nacelle of a wind turbine in accordance with an embodiment of the invention. Graph 120 includes plots 122-125 for the output of each accelerometer verses yaw angle in polar coordinates. Graph 130 includes plots 132-135 for the output of each accelerometer verses yaw angle in Cartesian coordinates. Accelerations from four distributed control nodes measured in the y-direction were used for the analysis.

Advantageously, the process for determining tower inclination may be fully automated, so embodiments of the invention can be implemented to collect tower inclination data without requiring human interaction. The data collected may be automatically stored in a database, and used to determine long term trends in tower behavior, e.g., diurnal, seasonal, and aging related behavior. Further, systems may be configured to only collect acceleration data at wind speeds below cut-in in order to avoid loss of energy production. Because data is taken from multiple yaw angles, the process may also compensate for the tower being out of vertical due to the overhanging moment of the nacelle.

Having established embodiments of obtaining the inclination of the tower, a time-dependent effect of sunlight on the inclination of the tower can be determined by collecting a first data set of the acceleration data during a first period of time, and collecting a second data set of the acceleration data during a second period of time. Having the two data sets, a first inclination of the tower can be determined from the first data set, and a second inclination of the tower can be determined from the second data set. A time-dependent effect of a presence or an absence of sunlight on the inclination of the tower is determined based on the first inclination of the tower and the second inclination of the tower. The first period of time and the second period of time being periods with different levels of sunlight on the tower. In one embodiment this can be done by comparing daytime verses nighttime tower inclination levels. In another embodiment, light level sensors can be used to establish the first period of time and the second period of time as periods of different sunlight levels. Other less direct measures for establishing different sunlight levels can be such information as cloudiness at the site of the wind turbine.

In general, the features, functions, applications, processes, or modules executed to implement the embodiments of the invention may be referred to herein as "computer program code," or simply "program code." Program code typically comprises computer-readable instructions that, when read and executed by one or more processors of a computing device, cause the computing device to perform the operations necessary to implement embodiments of the invention. The program code embodied in any aspects of the invention described herein is capable of being individually or collectively distributed as a computer program product in a variety of different forms. In particular, the program code may be distributed using a non-transitory computer-readable storage medium having computer-readable program instructions thereon. Computer-readable program instructions may also be downloaded to a computing device from a computer-readable storage medium, as well as being saved to a computer-readable storage medium once they have been downloaded to the computing device.

The terminology used herein is for the purpose of describing particular embodiments only and is not intended to be limiting of the embodiments of the invention. As used herein, the singular forms "a", "an" and "the" are intended to include both the singular and plural forms, and the terms "and" and "or" are each intended to include both alternative and conjunctive combinations, unless the context clearly indicates otherwise. It will be further understood that the terms "comprises" or "comprising," when used in this specification, specify the presence of stated features, integers, actions, steps, operations, elements, or components, but do not preclude the presence or addition of one or more other features, integers, actions, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising".

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

**Claims**

1. A method of measuring an inclination of a tower (12) of a wind turbine (10) including a nacelle (14) mounted on the tower (12), comprising:

   collecting acceleration data from an accelerometer (50) operatively coupled to the nacelle (14) and configured to sense acceleration along an accelerometer axis (*x, y, z*) while the nacelle (14) is in each of a plurality of yaw positions;
   determining a level of acceleration along the accelerometer axis (*x, y, z*) due to gravity (28) at each yaw position to generate a plurality of acceleration levels; and
   determining the inclination of the tower (12) based on the plurality of acceleration levels further comprising the steps:

   collecting a first data set of the acceleration data during a first period of time;
   collecting a second data set of the acceleration data during a second period of time;
   determining a first inclination of the tower (12) from the first data set;
   determining a second inclination of the tower (12) from the second data set; and
   determining a time-dependent effect of a presence or an absence of sunlight on the inclination of the tower (12) based on the first inclination of the tower (12) and the second inclination of the tower (12).

**2.** The method according to claim 1, wherein the nacelle (14) rotates about an axis of rotation (42), and the accelerometer (50) is configured so that the accelerometer axis ($x, y, z$) is normal to the axis of rotation (42).

**3.** The method according to claim 2, wherein the plurality of yaw positions covers a full rotation of the nacelle (14) about the axis of rotation (42).

**4.** The method according to any of claims 1-3 wherein determining the inclination of the tower (12) based on the plurality of acceleration levels comprises:

determining a maximum acceleration level of the plurality of acceleration levels;
determining a minimum acceleration level of the plurality of acceleration levels; and
determining the inclination of the tower (12) based on the maximum acceleration level and the minimum acceleration level.

**5.** The method according to claim 4, wherein determining the inclination of the tower (12) based on the maximum acceleration level and the minimum acceleration level comprises:

determining a first inclination of the accelerometer (50) based on the maximum acceleration level;
determining a second inclination of the accelerometer (50) based on the minimum acceleration level;
determining the inclination of the tower (12) based on a difference between the first inclination of the accelerometer (50) and the second inclination of the accelerometer (50).

**6.** The method according to any of claims 1-5, wherein collecting the acceleration data from the accelerometer (50) while the nacelle (14) is in each of the plurality of yaw positions comprises, at each yaw position:

stopping the nacelle (14) at the yaw position;
collecting acceleration data for a period of time while the nacelle (14) is stopped; and
restarting yawing of the nacelle (14) after the period of time.

**7.** The method according to claim 6, further comprising:

discarding a first portion of the acceleration data collected during a start portion of the period of time;
optionally discarding a second portion of the acceleration data collected during an end portion of the period of time; and
low-pass filtering a remaining portion of the acceleration data that was not discarded to produce filtered acceleration data,
wherein the level of acceleration at each yaw position is determined based on the filtered acceleration data.

**8.** The method according to claim 7, further comprising:

determining a mean value of the level of acceleration at each yaw position based on the filtered acceleration data; and
detrending the filtered acceleration data based on the mean values of the levels of acceleration.

**9.** The method according to any of claims 1-8, further comprising:

generating an acceleration plot (132) including the level of acceleration at each yaw position plotted relative to the yaw position;
comparing the acceleration plot (132) to a sinusoidal plot; and
discarding the acceleration data if the acceleration plot (132) does not match the sinusoidal plot.

**10.** The method according to any of claims 1-9 wherein the acceleration data is collected while the wind turbine (10) is in a low wind idle mode or a parked mode.

**11.** The method according to any of claims 1-10 wherein the acceleration data is collected while the wind speed is below a wind speed threshold selected from the group consisting of a cut-in wind speed and a service wind speed.

**12.** A wind turbine (10) comprising:

a controller (64) in communication with the accelerometer (50) and configured to implement the method of any of claims 1-11.

13. A computer program product comprising:

    a non-transitory computer-readable storage medium; and
    program code stored on the non-transitory computer-readable storage medium that, when executed by one or more processors (66) of a controller (64), causes the controller (64) to implement the method of any of claims 1-11.

14. A controller (64) for a wind turbine (10) comprising:

    one or more processors (66); and
    a memory (68) coupled to the one or more processors (66) and including program code that, when executed by the one or more processors (66), causes the controller (64) to implement the method of any of claims 1-11.

**Patentansprüche**

1. Verfahren zum Messen einer Neigung eines Turms (12) einer Windkraftanlage (10), die eine am Turm (12) angebrachte Gondel (14) beinhaltet; umfassend:

    Sammeln von Beschleunigungsdaten von einem Beschleunigungsmesser (50), der betriebsmäßig mit der Gondel (14) gekoppelt ist und konfiguriert ist, um eine Beschleunigung entlang einer Beschleunigungsachse (x, y, z) abzutasten, während die Gondel (14) sich in jeder einer Vielzahl von Gier-Positionen befindet;
    Bestimmen einer Beschleunigungsstufe entlang der Beschleunigungsachse (x, y, z) aufgrund der Schwerkraft (28) an jeder Gier-Position, um eine Vielzahl von Beschleunigungsstufen zu erzeugen; und
    wobei Bestimmen der Neigung des Turms (12) basierend auf der Vielzahl von Beschleunigungsstufen weiter die folgenden Schritte umfasst:

        Sammeln eines ersten Datensatzes der Beschleunigungsdaten während eines ersten Zeitraums;
        Sammeln eines zweiten Datensatzes der Beschleunigungsdaten während eines zweiten Zeitraums;
        Bestimmen einer ersten Neigung des Turms (12) aus dem ersten Datensatz;
        Bestimmen einer zweiten Neigung des Turms (12) aus dem zweiten Datensatz; und Bestimmen einer zeitabhängigen Wirkung eines Vorhandenseins oder eines Nichtvorhandenseins von Sonnenlicht auf die Neigung des Turms (12) basierend auf der ersten Neigung des Turms (12) und der zweiten Neigung des Turms (12).

2. Verfahren nach Anspruch 1, wobei sich die Gondel (14) um eine Drehachse (42) dreht und der Beschleunigungsmesser (50) so konfiguriert ist, dass die Beschleunigungsachse (x, y, z) normal zur Drehachse (42) ist.

3. Verfahren nach Anspruch 2, wobei die Vielzahl von Gier-Positionen eine volle Drehung der Gondel (14) um die Drehachse (42) abdeckt.

4. Verfahren nach einem der Ansprüche 1-3, wobei Bestimmen der Neigung des Turms (12) basierend auf der Vielzahl von Beschleunigungsstufen umfasst:

    Bestimmen einer maximalen Beschleunigungsstufe aus der Vielzahl von Beschleunigungsstufen;
    Bestimmen einer minimalen Beschleunigungsstufe aus der Vielzahl von Beschleunigungsstufen; und
    Bestimmen der Neigung des Turms (12) basierend auf der maximalen Beschleunigungsstufe und der minimalen Beschleunigungsstufe.

5. Verfahren nach Anspruch 4, wobei Bestimmen der Neigung des Turms (12) basierend auf der maximalen Beschleunigungsstufe und der minimalen Beschleunigungsstufe umfasst:

    Bestimmen einer ersten Neigung des Beschleunigungsmessers (50) basierend auf der maximalen Beschleunigungsstufe;
    Bestimmen einer zweiten Neigung des Beschleunigungsmessers (50) basierend auf der minimalen Beschleunigungsstufe;

Bestimmen der Neigung des Turms (12) basierend auf einer Differenz zwischen der ersten Neigung des Beschleunigungsmessers (50) und der zweiten Neigung des Beschleunigungsmessers (50).

6. Verfahren nach einem der Ansprüche 1-5, wobei Sammeln der Beschleunigungsdaten von dem Beschleunigungsmesser (50), während sich die Gondel (14) in jeder der Vielzahl von Gier-Positionen befindet, an jeder Gier-Position Folgendes umfasst:

   Stoppen der Gondel (14) an der Gier-Position;
   Sammeln von Beschleunigungsdaten für einen Zeitraum, während die Gondel (14) gestoppt ist; und
   erneutes Starten von Gieren der Gondel (14) nach dem Zeitraum.

7. Verfahren nach Anspruch 6, weiter umfassend:

   Verwerfen eines ersten Abschnitts der Beschleunigungsdaten, die während eines Startabschnitts des Zeitraums gesammelt wurden;
   wahlweise Verwerfen eines zweiten Abschnitts der Beschleunigungsdaten, die während eines Endabschnitts des Zeitraums gesammelt wurden; und
   Tiefpassfiltern eines verbleibenden Abschnitts der Beschleunigungsdaten, der nicht verworfen wurde, um gefilterte Beschleunigungsdaten zu erzeugen,
   wobei die Beschleunigungsstufe an jeder Gier-Position basierend auf den gefilterten Beschleunigungsdaten bestimmt wird.

8. Verfahren nach Anspruch 7, weiter umfassend:

   Bestimmen eines Durchschnittswerts der Beschleunigungsstufe an jeder Gier-Position basierend auf den gefilterten Beschleunigungsdaten; und
   Trendbereinigen der gefilterten Beschleunigungsdaten basierend auf den Durchschnittswerten der Beschleunigungsstufen.

9. Verfahren nach einem der Ansprüche 1-8, weiter umfassend:

   Erzeugen eines Beschleunigungsdiagramms (132), das die Beschleunigungsstufe an jeder Gier-Position aufgezeichnet gegenüber der Gier-Position beinhaltet;
   Vergleichen des Beschleunigungsdiagramms (132) mit einem sinusförmigen Diagramm; und
   Verwerfen der Beschleunigungsdaten, wenn das Beschleunigungsdiagramm (132) nicht mit dem sinusförmigen Diagramm übereinstimmt.

10. Verfahren nach einem der Ansprüche 1-9, wobei die Beschleunigungsdaten gesammelt werden, während die Windkraftanlage (10) in einem Ruhemodus bei schwachem Wind oder einem geparkten Modus ist.

11. Verfahren nach einem der Ansprüche 1-10, wobei die Beschleunigungsdaten gesammelt werden, während die Windgeschwindigkeit unter einer Windgeschwindigkeitsschwelle liegt, die aus der Gruppe ausgewählt ist, die aus einer Einschaltwindgeschwindigkeit und einer Dienstwindgeschwindigkeit besteht.

12. Windkraftanlage (10), umfassend:
    eine Steuervorrichtung (64) in Kommunikation mit dem Beschleunigungsmesser (50) und konfiguriert, um das Verfahren nach einem der Ansprüche 1-11 zu implementieren.

13. Computerprogrammprodukt, umfassend

    ein nichtflüchtiges computerlesbares Speichermedium; und
    Programmcode, der auf dem nichtflüchtigen computerlesbaren Speichermedium gespeichert ist, der, wenn er von einem oder mehreren Prozessoren (66) einer Steuervorrichtung (64) ausgeführt wird, bewirkt, dass die Steuervorrichtung (64) das Verfahren nach einem der Ansprüche 1-11 implementiert.

14. Steuervorrichtung (64) für eine Windkraftanlage (10), umfassend:

    einen oder mehrere Prozessoren (66); und

einen Speicher (68), der mit dem einen oder den mehreren Prozessoren (66) gekoppelt ist und Programmcode beinhaltet, der, wenn er von dem einen oder den mehreren Prozessoren (66) ausgeführt wird, bewirkt, dass die Steuervorrichtung (64) das Verfahren nach einem der Ansprüche 1-11 implementiert.

**Revendications**

1. Procédé de mesure d'une inclinaison d'une tour (12) d'une éolienne (10) incluant une nacelle (14) montée sur la tour (12), comprenant les étapes consistant à :

   recueillir des données d'accélération à partir d'un accéléromètre (50) couplé de manière opérationnelle à la nacelle (14) et configuré pour détecter une accélération le long d'un axe d'accéléromètre (x, y, z) alors que la nacelle (14) se trouve dans chacune d'une pluralité de positions de lacet ;
   déterminer un niveau d'accélération le long de l'axe d'accéléromètre (x, y, z) dû à la gravité (28) à chaque position de lacet pour générer une pluralité de niveaux d'accélération ; et
   déterminer l'inclinaison de la tour (12) sur la base de la pluralité de niveaux d'accélération, comprenant en outre les étapes consistant à :

      recueillir un premier ensemble de données des données d'accélération au cours d'une première période de temps ;
      recueillir un second ensemble de données des données d'accélération au cours d'une seconde période de temps ;
      déterminer une première inclinaison de la tour (12) à partir du premier ensemble de données ;
      déterminer une seconde inclinaison de la tour (12) à partir du second ensemble de données ; et déterminer un effet dépendant du temps d'une présence ou d'une absence de lumière du soleil sur l'inclinaison de la tour (12) sur la base de la première inclinaison de la tour (12) et de la seconde inclinaison de la tour (12).

2. Procédé selon la revendication 1, dans lequel la nacelle (14) tourne autour d'un axe de rotation (42), et l'accéléromètre (50) est configuré de sorte que l'axe d'accéléromètre (x, y, z) soit normal par rapport à l'axe de rotation (42).

3. Procédé selon la revendication 2, dans lequel la pluralité de positions de lacet couvre une rotation complète de la nacelle (14) autour de l'axe de rotation (42).

4. Procédé selon l'une quelconque des revendications 1-3, dans lequel l'étape consistant à déterminer l'inclinaison de la tour (12) sur la base de la pluralité de niveaux d'accélération comprend les étapes consistant à :

   déterminer un niveau d'accélération maximal parmi la pluralité de niveaux d'accélération ;
   déterminer un niveau d'accélération minimal parmi la pluralité de niveaux d'accélération ; et
   déterminer l'inclinaison de la tour (12) sur la base du niveau d'accélération maximal et du niveau d'accélération minimal.

5. Procédé selon la revendication 4, dans lequel l'étape consistant à déterminer l'inclinaison de la tour (12) sur la base du niveau d'accélération maximal et du niveau d'accélération minimal comprend les étapes consistant à :

   déterminer une première inclinaison de l'accéléromètre (50) sur la base du niveau d'accélération maximal ;
   déterminer une seconde inclinaison de l'accéléromètre (50) sur la base du niveau d'accélération minimal ;
   déterminer l'inclinaison de la tour (12) sur la base d'une différence entre la première inclinaison de l'accéléromètre (50) et la seconde inclinaison de l'accéléromètre (50).

6. Procédé selon l'une quelconque des revendications 1-5, dans lequel l'étape consistant à recueillir les données d'accélération de l'accéléromètre (50) alors que la nacelle (14) se trouve dans chacune de la pluralité de positions de lacet comprend, à chaque position de lacet, les étapes consistant à :

   arrêter la nacelle (14) en position de lacet ;
   recueillir des données d'accélération au cours d'une période de temps pendant laquelle la nacelle (14) est arrêtée ; et
   redémarrer le mouvement de lacet de la nacelle (14) après la période de temps.

**7.** Procédé selon la revendication 6, comprenant en outre les étapes consistant à :

rejeter une première partie des données d'accélération recueillies au cours d'une partie initiale de la période de temps ;

facultativement rejeter une seconde partie des données d'accélération recueillies au cours d'une partie finale de la période de temps ; et

filtrer en mode passe-bas une partie restante des données d'accélération qui n'a pas été rejetée pour produire des données d'accélération filtrées,

dans lequel le niveau d'accélération à chaque position de lacet est déterminé sur la base des données d'accélération filtrées.

**8.** Procédé selon la revendication 7, comprenant en outre les étapes consistant à :

déterminer une valeur moyenne du niveau d'accélération à chaque position de lacet sur la base des données d'accélération filtrées ; et

éliminer la composante tendancielle des données d'accélération filtrées sur la base des valeurs moyennes des niveaux d'accélération.

**9.** Procédé selon l'une quelconque des revendications 1-8, comprenant en outre les étapes consistant à :

générer un tracé d'accélération (132) incluant le niveau d'accélération à chaque position de lacet tracé par rapport à la position de lacet ;

comparer le tracé d'accélération (132) à un tracé sinusoïdal ; et

rejeter les données d'accélération si le tracé d'accélération (132) ne correspond pas au tracé sinusoïdal.

**10.** Procédé selon l'une quelconque des revendications 1-9, dans lequel les données d'accélération sont recueillies alors que l'éolienne (10) est en mode de ralenti à faible vent ou en mode de stationnement.

**11.** Procédé selon l'une quelconque des revendications 1-10, dans lequel les données d'accélération sont recueillies alors que la vitesse du vent est inférieure à un seuil de vitesse du vent sélectionné dans le groupe consistant en une vitesse de vent d'enclenchement et une vitesse de vent de service.

**12.** Éolienne (10) comprenant :

un dispositif de commande (64) en communication avec l'accéléromètre (50) et configuré pour mettre en oeuvre le procédé selon l'une quelconque des revendications 1-11.

**13.** Produit de programme informatique comprenant :

un support de stockage non transitoire lisible par ordinateur ; et

un code de programme stocké sur le support de stockage non transitoire lisible par ordinateur qui, lorsqu'il est exécuté par un ou plusieurs processeurs (66) d'un dispositif de commande (64), amène le dispositif de commande (64) à mettre en oeuvre le procédé selon l'une quelconque des revendications 1-11.

**14.** Dispositif de commande (64) pour une éolienne (10) comprenant :

un ou plusieurs processeurs (66) ; et

une mémoire (68) couplée aux un ou plusieurs processeurs (66) et incluant un code de programme qui, lorsqu'il est exécuté par les un ou plusieurs processeurs (66), amène le dispositif de commande (64) à mettre en oeuvre le procédé selon l'une quelconque des revendications 1-11.

FIG. 1

FIG. 2

*54*

*50*

ACCELEROMETERS

*62*

SUPERVISORY CONTROLLER

*56*

WIND TURBINE CONTROLLER

*58*

PITCH SYSTEM

*20*

BLADES

*60*

YAW SYSTEM

*14*

NACELLE

FIG. 3

*64*

CONTROLLER

*68*

MEMORY

*72*

APPLICATION

*74*

DATA STRUCTURE

*70*

I/O INTERFACE

*66*

PROCESSOR

FIG. 4

FIG. 5

FIG. 6

*100*

START

↓

ENTER IDLE/PARKED
MODE · *102*

↓

YAW NACELLE TO
STARTING POSITION · *104*

↓

COLLECT & PROCESS RAW
ACCELERATION DATA · *106*

↓

DATA
COLLECTED AT EACH
POSITION? · *108*

— YES → DETREND
PROCESSED DATA · *112*

— NO → YAW NACELLE TO
NEXT POSITION · *110*

DETREND PROCESSED DATA ↓

DATA
MATCHES PROFILE
? · *114*

— NO → DISCARD DATA · *116*

— YES → DETERMINE TOWER
INCLINATION · *118*

↓

END

## FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3497326 A1
- US 2014316740 A1
- EP 2133563 A1
- DE 102016103659 A1